# EUROPEAN PATENT SPECIFICATION

(11) **EP 1 509 039 B1**
(45) Date of publication and mention of the grant of the patent: **03.10.2012**
(21) Application number: 04103874.6
(22) Date of filing: 11.08.2004
(51) Int. Cl.: H04N 5/225, H04N 5/232, H01H 19/58

(54) **A Camera**
Kamera
Caméra

(30) Priority: 18.08.2003 KR 2003056925
(43) Date of publication of application: 23.02.2005
(73) Proprietor: Samsung Electronics Co., Ltd., Suwon-si, Gyeonggi-do, 443-742 (KR)
(72) Inventor: YOON, Hee-joung, Gyeonggi-do (KR); KIM, Hyun-ah, Gyeonggi-do, (KR)
(74) Representative: Walaski, Jan Filip

(56) References cited:
- WO-A-03/042851
- JP-A- 06 169 418
- JP-A- 2001 358 973
- US-B1- 6 295 088

## Description

The present invention relates to a camera, comprising a handheld component.

An image photographing apparatus (for example, a camcorder), is a known device allowing the recording and playback of primarily moving images, usually onto a magnetic tape.

The camcorder includes a lens for capturing the image, a recording and reproducing device for recording and reproducing the captured image and a display device for displaying the recorded images. The known recording and reproducing device uses a deck with a magnetic tape. However, recent developments in recording and reproducing devices allow the use of other storage devices such as memory sticks, as well as other developments such as high-capacity High Definition Displays (HDD). These developments have enabled the reduction in size and weight of the camcorder.

Display devices generally include a Liquid Crystal Display (LCD) panel mounted to a side of a body of the camcorder. The LCD can be opened and closed. The LCD also includes a viewfinder. Generally, the LCD panel is placed on the left side of the camcorder body from a point of view of the operator. In other words, most camcorders are designed for right-handed users, and accordingly, the LCD panel is disposed at the left side to avoid interfering with the user's right hand. Accordingly, the LCD panel is opened and closed at the beginning and end of a recording, and the LCD panel turns by a predetermined angle when opened. Usually the viewfinder is disposed at the opposite side to the lens.

However, if the operator is a left-handed user, because the LCD panel is designed for the right-handed user and is disposed at the left side of the camcorder, the LCD panel is inconvenient for the left-handed user to operate. Also, even if the operator is a right-handed user, the operator sometimes wants to hold the camcorder using their left hand. In this situation, the operator is inconvenienced.

The present invention has been developed in order to solve the above described problems in the prior art. Accordingly, it is an aspect of the present invention to provide an image-photographing apparatus having an improved structure and method, which is capable of selectively changing a position of a display panel to suit both the right-handed operator and left-handed operator.

The present invention relates to a camera, comprising a handheld component.

The image photographing apparatus for both the right-handed and left handed operators have been used in other applications. For example, JP 06 169418 disclosed a video camera in which a monitor is rotated between a left side of a body and a right side of the body. JP 2001 358973 discloses a video camera in which a connection mechanism is rotated for rotating a display panel. WO 03/042851 discloses a hand held device such as a digital camera having a rotatable display panel.

The invention provides an image-photographing apparatus comprising: a camera unit for capturing an image; a body in which the camera unit is disposed; a display panel for displaying the image; and a hinge unit connected to the display panel, for rotating the display panel between one side of the body and the other side of the body about a first axis and rotating the display panel about a second axis perpendicular to the first axis, wherein the hinge unit comprises a fixing bracket fixed to the body and having a shaft hole; a shaft member inserted into the shaft hole; and a rotary bracket supported on the shaft member to be rotatable with respect to the fixing bracket.

The image-photographing apparatus according to the invention is defined in claim 1_{.}

This is advantageous because by allowing the display screen to be located on either the left or right hand side of the camera, the user is able to use either hand to operate the camera.

An embodiment of the present invention will now be described, by way of example only, and with reference to the accompanying drawings, in which:
Figure 1 is a perspective view showing an image-photographing apparatus according to an embodiment of the present invention;
Figure 2 is a partial cross section perspective view showing the image-photographing apparatus of Figure 1;
Figure 2B is an enlarged perspective view showing the main part of Figure 2;
Figure 3 is an exploded perspective view showing the first shaft unit of the hinge unit of Figure 2A;
Figure 4 is an exploded perspective view showing the second shaft unit of the hinge unit of Figure 2A;
Figure 5 is a plan view showing the detecting switch of Figure 3;
Figure 6 is a view showing the display panel mounted in the mounting portion of the body of the display panel;
Figure 7A and 7B are views respectively showing the display panel rotated by 90° and a connection to the detecting switch in a state that the display panel is rotated by 90°;
Figure 8A and 8B are views respectively showing the display panel rotated by 135° and a connection to the detecting switch in a state that the display panel is rotated by 135°;
Figure 9A and 9B are views respectively showing the display panel rotated by 180° and a connection to the detecting switch in a state that the display panel is rotated by 180°;
Figure 10A and 10B are views respectively showing the display panel rotated by 225 ° and a connection to the detecting switch in a state that the display panel is rotated by 225°; and
Figure 11A and 11B are views respectively showing the display panel rotated by 270° and a connection to the detecting switch in a state that the display panel is rotated by 270°.

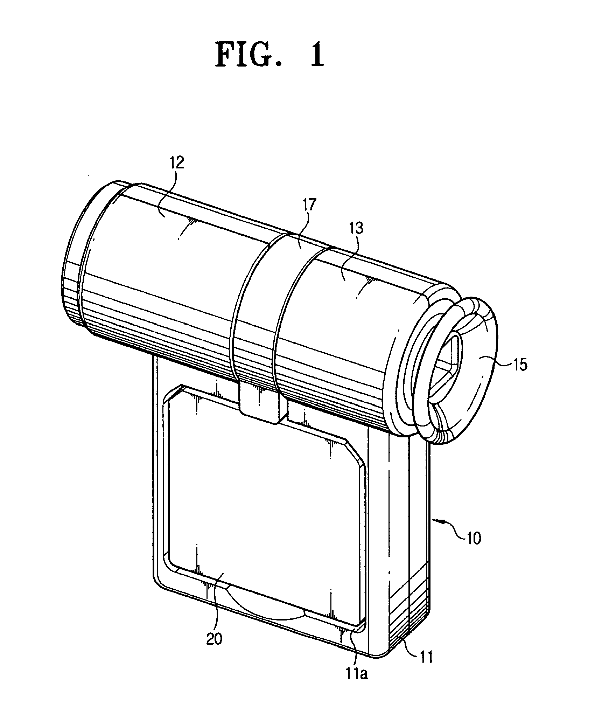

Referring to Figure 1, an image photographing apparatus (or camera) according to an embodiment of the present invention includes a body 10, and a display panel 20 movably disposed to the body 10.

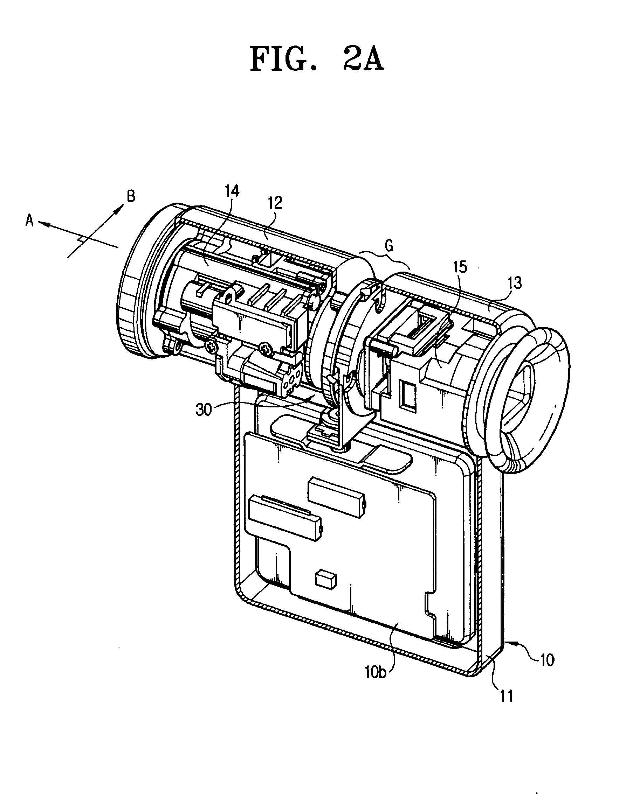

As shown in Figure 2A, the body 10 has a first case 11 in which a deck and a circuit board 10b are mounted, and a second case 12 and a third case 13 disposed above the first case 11. The second case 12 and the third case 13 are connected together and are flush with one another. The second and the third cases 12 and 13 are lens barrel type cases, and with predetermined gap G provided therebetween. A lens unit 14 is disposed in the second case 12 to capture an image, and a viewfinder unit 15 is disposed in the third case 13.

Also, the first case 11 has a panel receiving portion 11a located in one side thereof. A battery receiving portion (not shown) is located in the other side of the first case 11, opposite the panel receiving portion 11a (see Figure 1).

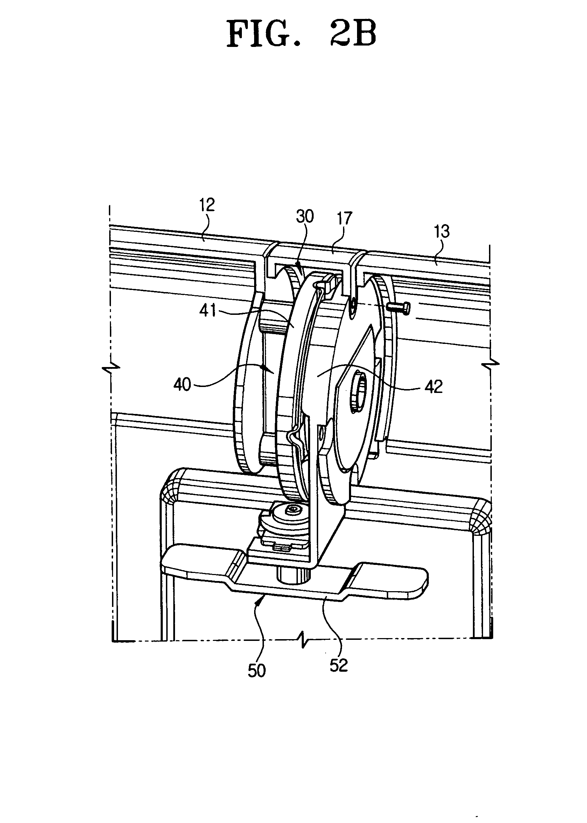

In order to cover the gap 'G' (and so make the second case 12 and third case 13 flush with one another), a cover bracket 17 is connected to a hinge unit 30. In other words, the cover bracket 17 is connected to a rotary bracket 42 (see Figure 2B), which will be described in detail later, so that the cover bracket 17 is rotated with the rotary bracket 42 whilst covering the gap G.

The display panel 20 is connected to the body 10 by the hinge unit 30 so that the display panel 20 is movable to the right and left sides of the body 10 and, more specifically, the first case 11. In other words, the display panel 20 is configured such that it rotates about two axes, enabling the display panel 20 to rotate about an image-photographing direction 'A' and a predetermined axial direction 'B' which is perpendicular to direction 'A'.

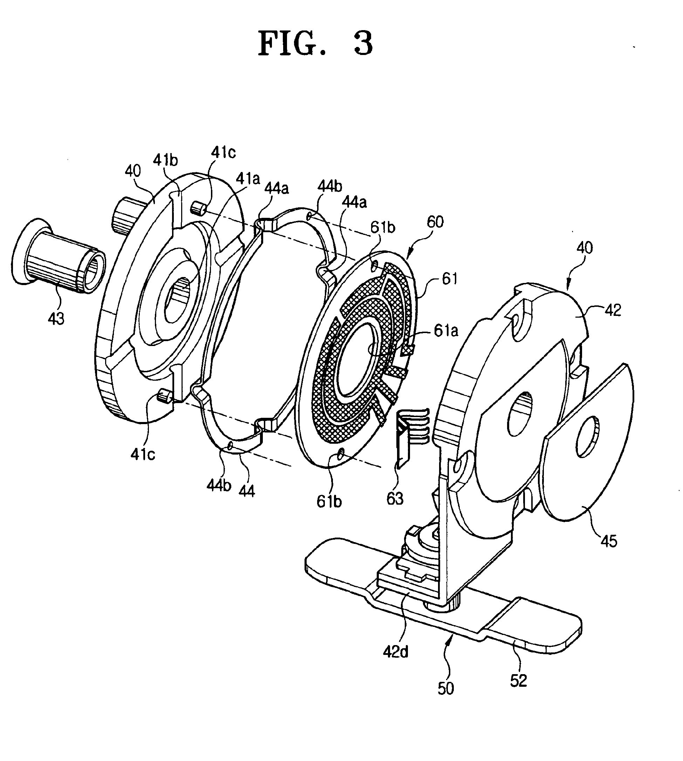

Referring to Figure 2B and Figure 3, the hinge unit 30 includes a first axis unit 40 for turning the display panel 20 about the image-photographing direction 'A', and a second axis unit 50 connected to the first axis unit 40, for turning the display panel 20 about the axial direction 'B'.

The first axis unit 40 includes a fixing bracket 41, a rotary bracket 42, a shaft member, a click bracket 44, and a fixing member 45.

The fixing bracket 41 is fixed to an upper end of the body 10 and specifically, to a surface of the second case 12 which faces the third case 13. The fixing bracket 41 has a shaft hole 41a into which the shaft member 43 is inserted. A surface of the fixing bracket 41, which faces the third case 13, has a plurality of click recesses 41b and at least one protrusion 41c. The click recesses 41b are formed at a predetermined interval relative to the shaft hole 41 a.

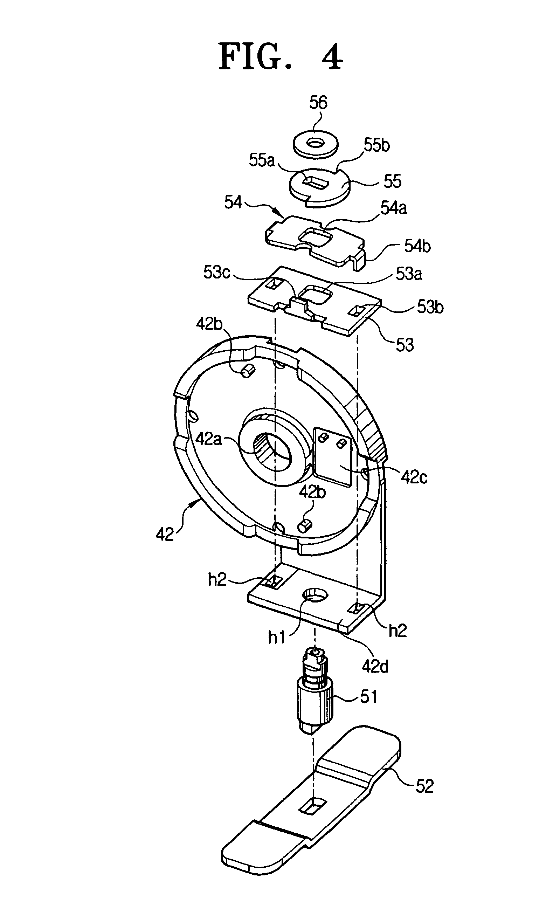

The rotary bracket 42 has a shaft hole 42a (see Figure 4) into which the shaft member 43 is inserted, and which supports the second axis unit 50. The rotary bracket 42 rotates about the shaft member 43 with the shaft member 42 being inserted into the shaft hole 42a. In other words, the rotary bracket 42 rotates in the image-photographing direction 'A', and accordingly, the display panel 20 rotates by a predetermined angle in the image-photographing direction 'A'. Referring to Figure 4, the rotary bracket 42 has a protrusion 42b protruding from a surface facing the fixing bracket 41. The protrusion 42b secures the click bracket 44. Also, the rotary bracket 42 is provided with a receiving recess 42c depressed therein, for receiving and supporting a switching elastic piece 63, which will be described later. Also, a supporting portion 42d extends from one side of the rotary bracket 42 in a curve to support the second axis unit 50.

The click bracket 44 is located between the fixing bracket 41 and the rotary bracket 42. The click bracket 44 is a ring-type plate spring and has a plurality of embossed portions 44a at predetermined intervals, corresponding to the click recesses 41b. Also, the click bracket 44 has position fixing holes 44b corresponding to the protrusions 42b of the rotary bracket 42. As the protrusions 42b fit into the holes 44b, the click bracket 44 is fixed to the rotary bracket 42. This means that the embossed portions 44a of the click bracket 44 are inserted into and separated from the click recesses 41 b as the rotary bracket 42 is rotated. Accordingly, a click occurs at a predetermined angle.

As one end of the shaft member 43 is snuggly fitted into the fixing member 45, the fixing bracket 41, the rotary bracket 42 and the click bracket 44 are tightly assembled with one another, without any separations.

Referring now to Figure 3, the first axis unit 40 further includes a sensing switch 60 to detect rotation of the display panel 20, 10 and specifically, the position of the display panel when the display panel 20 rotates in the image-photographing direction 'A'.

The sensing switch 60 includes a pattern terminal panel 61 supported on the fixing bracket 41 and the switching elastic piece 63 is placed on the rotary bracket 42 such that the switching elastic piece 63 faces, and makes contact with, the pattern terminal panel 61. It should be noted that the switching elastic piece 63 has preferably metallic contacts and is formed such that it remains in contact with the pattern terminal panel 61. The pattern terminal panel 61 is a disk-type plate having a hollow space 61 a formed in a centre thereof, through which the shaft member 43 passes. The pattern terminal panel 61 has a connection hole 61b which engages with the protrusion 41c of the fixing bracket 41. The pattern terminal panel 61 may be secured to the fixing bracket 41 by an adhesive. On the surface of the pattern terminal panel 61 facing the rotary bracket 42, is formed a switching terminal unit 62. The switching terminal unit 62 contains a number of electrical conductors formed in a predetermined pattern. These conductors are electrically connected to the switching elastic piece 63.

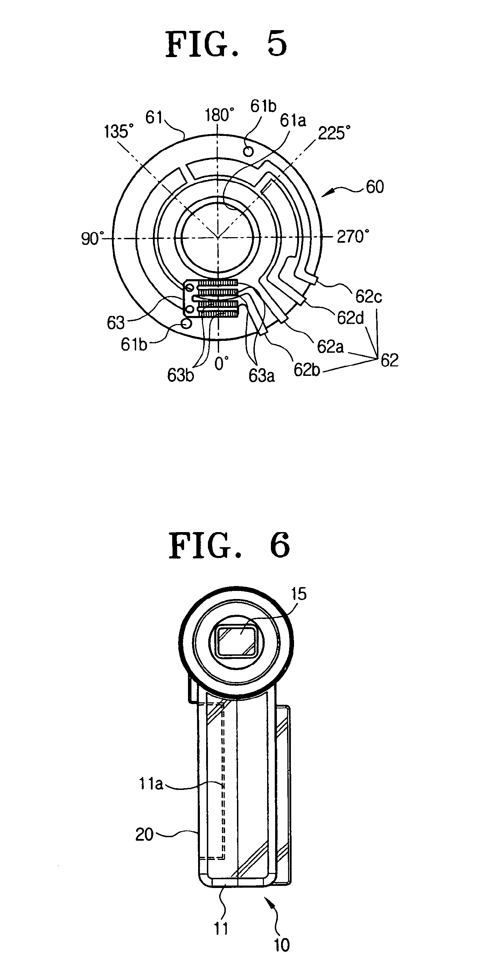

As shown in Figure 5, the switching terminal unit 62 includes a common terminal 62a formed around the hollow 61a in a predetermined circular pattern, and a first, a second, and a third mode terminal 62b, 62c, and 62d formed around the common terminal 62a in respective predetermined patterns. The common terminal 62a maintains contact with the switching elastic piece 63.

As the rotary bracket 42 rotates, the respective mode terminals 62b, 62c, and 62d selectively come into contact with the switching elastic piece 63 so forming an electrical contact. Accordingly, the sensing switch 60 detects a rotation angle of the rotary bracket 42 by detecting which mode terminal from amongst the first, second, and third mode terminals 62b, 62c and 62d are connected to the switching elastic piece 63 at any one time. Based on the information about the rotation angle, the sensing switch 60 detects the amount of rotation undergone by the display panel 20 and determines coordinates of the displayed image. For this, the respective first, second and third mode terminals 62b, 62c, and 62d extend around a predetermined fraction of the switching terminals unit 62. In other words, each of the first, second and third mode terminals 62b, 62c and 62d extend over a predetermined angle of the switching terminal unit 62, without overlapping. It is also possible that the common terminal 62a forms a ring shape outside the first, the second and the third mode terminals 62b, 62c, and 62d.

In an embodiment of the present invention, the first, the second, and the third mode terminals 62b, 62c, and 62d are each formed at a predetermined angular distance from a reference angle 0°. The reference angle 0° is determined when the first mode terminal 62b contacts with the switching elastic piece 63 when the display panel 20 is mounted in the panel receiving portion 11a of the body 10. As shown in Figure. 5, the first mode terminal 62b is continuously formed within a range from azimuth 0 ° to, at least, 135°. More specifically, the first mode terminal 62b extends from 0° to a predetermined distance between 135° to 180°. The second mode terminal 62c extends to a predetermined distance within a range from 125° to 225° from 0°, and the third mode terminal 62d is formed within a range from 225° to 270° from 0°. The respective mode terminals 62b, 62c, and 62d are concentrically positioned, but occupy spaces of different azimuth angles. In other words, the first, second and third mode terminals 62b, 62c and 62d do not overlap with one another. Preferably, the first and the second mode terminals 62b and 62c are separated from each other at a position somewhere between 135° and 180° from 0°, and the second and the third mode terminals 62c and 62d are separated from each other at a position between 180° and 225° from 0°.

The respective mode terminals 62b, 62c, and 62d are connected to a controller (not shown) to provide information about which mode terminal is contacting with the switching elastic piece 63. Based on the provided information, the controller selectively rotates the image coordinates displayed on the display panel 20 by at most 90° with respect to the previous mode and displays the rotated image coordinates.

The switching elastic piece 63 is fixed into the receiving recess 42c of the fixing bracket 42. The switching elastic piece 63 has a first contact piece 63a in contact with the basic terminal 62a at all times, and a second contact piece 63b adjacent to the first contact piece 63a and which contacts with one of the mode terminals 62b, 62c and 63d. In an embodiment, the first and the second contact pieces 63a and 63b are provided in pairs, each of which being formed by cutting, to thereby prevent deformations and to improve the contact. Also, the switching elastic piece 63 and the pattern terminal panel 61 are exchangeable in their position. In other words, the switching elastic means 63 can rotate and the pattern terminal panel 61 can remain fixed.

Referring now to Figures. 3 and 4, the second axis unit 50 is connected to the supporting portion 42d of the rotary bracket 42 to support and rotate the display panel 20 with respect to the axial direction 'B'. As the second axis unit 50 employs a conventional hinge construction, it includes a shaft 51 rotatably inserted into a shaft hole h1 of the supporting portion 42d, a panel supporting bracket 52 connected to a lower end of the shaft 51 inserted into the supporting portion 42d, a locking bracket 53 fixed to the supporting portion 42d and allows the shaft 51 to rotatably pass therethrough, a plate spring type elastic bracket 54, a rotation angle regulating member 55 and a fixing member 56 for preventing separation.

The supporting bracket 53 is connected to the display panel 20. Accordingly, the rotation of the supporting bracket 53 with respect to the shaft 51 and with respect to the rotary bracket 42 all occur within the display panel 20.

The locking bracket 53 is fixed to an upper surface of the supporting portion 42d together with the elastic (movable) bracket 54. In other words, the fixing bracket 54 has a pair of fixing hooks 54b, and the fixing hooks 54b pass through a pair of passing holes 53b formed in the locking bracket 53. The fixing hooks 54b are inserted into locking holes h2 formed in the supporting portion 42d. The locking bracket 53 and the elastic bracket 54 have shaft holes 53a, 54a, respectively, through which the shaft 52 is rotatably inserted. The regulating member 55 has a non-circular connection hole 55a to which the shaft 51 is connected. This means that the regulating member 55 is connected to the shaft whilst being in contact with the elastic bracket 54. The regulating member 55 thus rotates with the shaft 51. On the outer circumference of the regulating member 55 a pair of latching portions 55b are located that latch onto a regulating protrusion 53c as the regulating member 55 rotates. Since the regulating member 55 rotates whilst being in contact with the regulating protrusion 53c, the regulating member 55 is subject to less friction during the rotation, and also noise can be reduced. The fixing member 56 is connected to a top end of the shaft 51 to prevent the members 53, 54, and 55 from being separated from the shaft 51.

The operation of the camcorder with the above construction will now be described.

Figure 6 shows the situation where the display panel 20 is located in the body 10 prior to being opened. In this situation, the switching elastic piece 63 is positioned at the reference angle 0° as shown in Figure 5, and the common terminal 62a is electrically connected to the first mode terminal 62b.

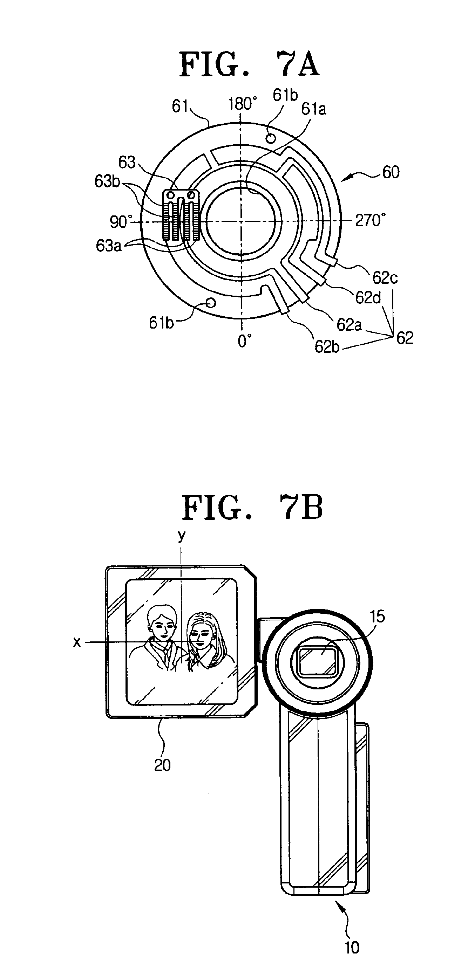

The display panel 20 is then rotated to a state illustrated in Figure 7A. Figure 7A shows the display panel 20 when rotated 90° in direction A by the first axis unit 40 and also rotated 90° in predetermined axial direction B by the second axis unit 50.

Also, in this situation, the rotary bracket 42 is rotated by 90°. Accordingly, the switching elastic piece 63 supported on the rotary bracket 42 is positioned at a distance, rotated relative to the reference angle (0°) by as much as 90°. This is shown in Figure 7B. In this situation, the switching elastic piece 63 is connected to the common terminal 62a and the first mode terminal 62b. Accordingly, the image on the display panel 20 has an upper image and a lower image extending along the 'y' axis. Also, in this situation the display panel 20 is positioned at the left side of the body 10 and is thus convenient for a right-handed person.

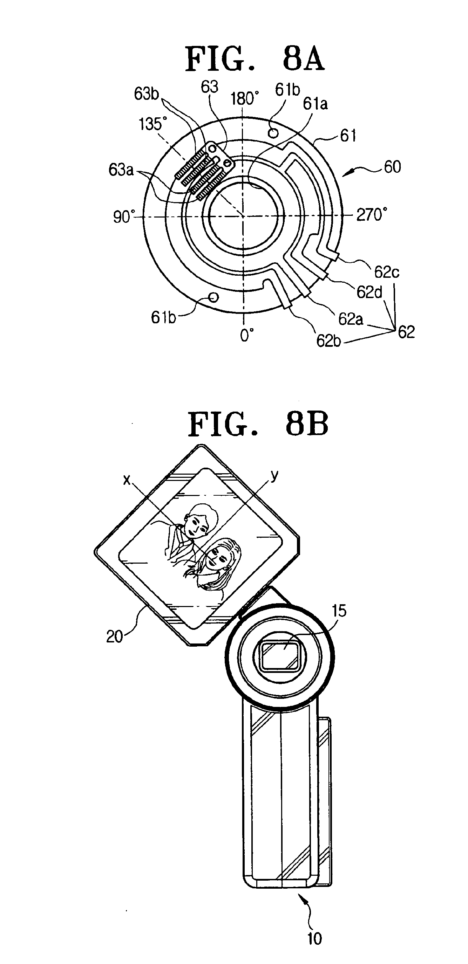

Figure 8B shows a situation where the display panel 20 is further rotated, in an anti-clockwise direction, 45° from the situation as shown in Figure 7A. In this state, the switching elastic piece 63 is still contacting the common terminal 62a and the first mode terminal 62b as shown in Figure 8A. Accordingly, the controller controls the image to be displayed on the display panel 20 with an upper image and a lower image extending along the 'y' axis. In other words, the display panel 20 shows the image that appears at 90°. This means that, as the display panel 20 has rotated in an anticlockwise direction and because the image has not been manipulated, a tilted image, relative to the camcorder, is displayed. The image will tilt between 0° and, at least, 135° from the reference.

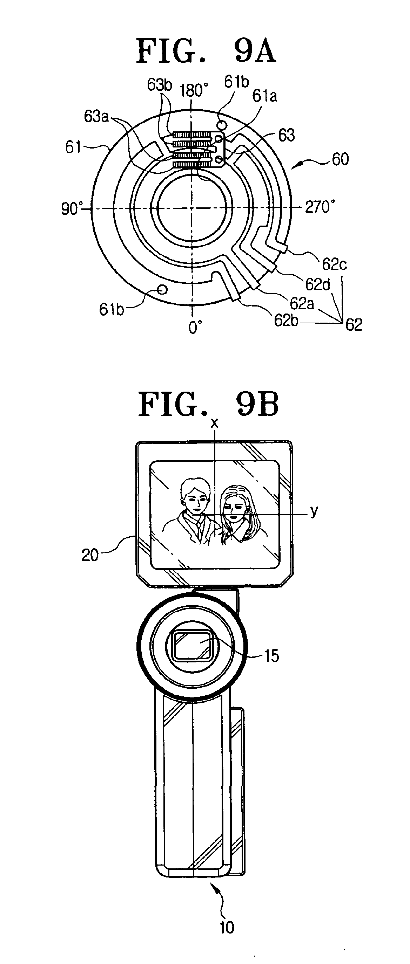

When the switching elastic piece 63 is moved toward 180° after passing 135°, the switching elastic piece 63 loses contact with the first mode terminal 62b and comes into contact with the second mode terminal 62c. The image displayed on the display panel 20 is manipulated and switched by 90°. In other words, as shown in FIG. 9B, when the display panel 20 is rotated by 180° from the initial position, the image displayed thereon is rotated and appears with the upper image and the lower image extending along the 'x' axis. As a result, the switching elastic piece 63 is electrically connected to the common terminal 62a and the second mode terminal 62c as shown in Figure 9A.

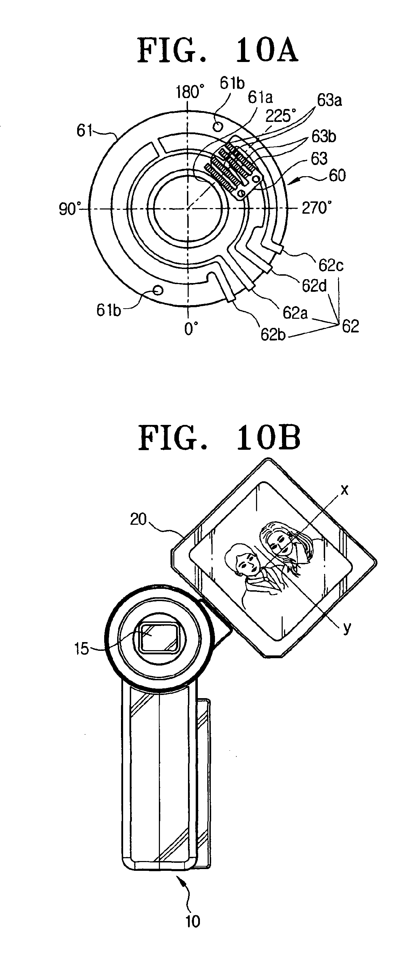

Consequently, as the display panel 20 is rotated further in an anti-clockwise direction from the situation in Figure 9B by 45° as shown in Figure 10B, the switching elastic piece 63 loses contact with the second mode terminal 62c and contacts with the third mode terminal 62d. Accordingly, the image displayed on the display panel 20 is rotated from the situation in Figure 9B by 90°. In other words, the image appears with an upper image and a lower image extending along the 'y' axis. It should be noted that in the third mode, the image is rotated by 180° from the original orientation of the image.

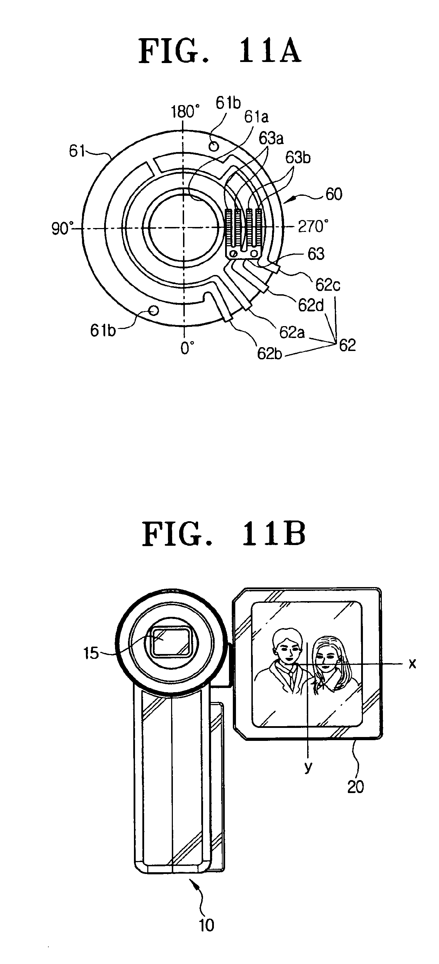

Also, as shown in Figures 11A and 11B, the display panel 20 can rotate further from the situation shown in Figure 10B by 45°. In this case, the switching elastic piece 63 maintains contact with the third mode terminal 62d, and the image appears along the 'y' axis. However, as mentioned above, in the third mode, the images have switched 180° with regard to the situation shown in Figure 7B. In other words, the image displayed in Figure 11B is the same image as shown in Figure 7B but the orientation has been switched by 180° so that the displayed image is correctly orientated for the new position of the display.

The situation illustrated in Figure 11A shows that the display panel 20 is turned to the right side of the body 10 completely. Accordingly, the left-handed person feels no inconvenience in holding the body 10. In other words, the situation illustrated in Figures 8A to 10B causes no inconvenience to either right-handed or the left-handed people. The situation shown in Figures 7A and 7B is suitable for right-handed people, while the situation shown in Figures 11A and 11B is suitable for the left-handed person.

As described above, the orientation of the image displayed on the display panel 20 is determined according to the rotation angle of the display panel 20. In other words, the construction allows the orientation of the image to be manipulated and even reversed when the display has rotated by a predetermined angle. However, the reversing angle should not be considered as limiting, and can be selected by the operator. Also, the image photographing apparatus is designed so that there occurs a click by the click bracket 43 after and before the image is reversed.

According to an embodiment of the present invention, since the display panel 20 can be selectively positioned at the right and left sides of the body 10, the operator can use the apparatus with their right or left hand with convenience.

Also, the image is reversed on predetermined coordinates according to the position of the display panel 20, the operator always can view a normal image during the use of the apparatus.

## Claims

1. An image-photographing apparatus comprising:
a camera unit for capturing an image;
a body (10) in which the camera unit is disposed;
a display panel (20) for displaying the image; and
a hinge unit (30) connected to the display panel (20), for rotating the display panel (20) between one side of the body (10) and the other side of the body (10) about a first axis (A) and rotating the display panel (20) about a second axis (B) perpendicular to the first axis (A),
**characterized in that** the hinge unit (30) comprises a fixing bracket (41) fixed to the body (10) and having a shaft hole (41a); a shaft member (43) inserted into the shaft hole (41a); a rotary bracket (42) supported on the shaft member (43) to be rotatable with respect to the fixing bracket (41) with reference to an image-photographing direction which is established by the camera unit corresponding to the first axis (A); and a second axis unit (50) supported by the rotary bracket supporting the display panel for rotation about the second axis (B).

2. The image-photographing apparatus of claim 1, wherein the fixing bracket (41), the shaft member and the rotary bracket (42) are provided in a first axis unit (40) supporting and rotating the display panel (20) at an angle with reference to the first axis (A) corresponding to an image-photographing direction, and the rotary bracket (42) supports the second axis unit (50) connected to the first axis unit (40), supporting the display panel (20) for rotation about the second axis (B) perpendicular to the image-photographing direction.

3. The image-photographing apparatus of claim 2, wherein the first axis unit (40) further comprises:
a click bracket (44) disposed between the fixing bracket (41) and the rotary bracket (41), for generating a click when the rotary bracket (41) rotates at a predetermined angle.

4. The image-photographing apparatus of claim 3, wherein the click bracket (44) is a plate spring that is fixed to the rotary bracket (42) and has embossed portions protruding therefrom at a predetermined rotation angle interval for insertion into click recess formed in the fixing bracket (41).

5. The image-photographing apparatus of claim 2, wherein the first axis unit (40) further comprises a detecting switch (60) for detecting a rotation state of the display panel (20).

6. The image-photographing apparatus of claim 5, wherein the detecting switch (60) comprises:
a pattern terminal panel (61) supported by the fixing bracket (41), and having a switch terminal (62) of a predetermined pattern disposed on a surface opposing the rotary bracket; and
a switching elastic piece (63) supported by and rotating together with the rotary bracket (42), and elastically contacting with the switch terminal (62) according to a rotation position to be switched on and off according to a position mode of the display panel.

7. The image-photographing apparatus of claim 6, wherein the switch terminal (62) comprises:
a basic terminal (62a) shaped in a circular arc pattern about a rotation axis of the rotary bracket (42); and
first, second and third mode terminals (62b, 62c and 62d) adjacent to the basic terminal (62a) and selectively connected to the reference terminal by the switching elastic piece (63) according to the rotation angle of the rotary bracket (42).

8. The image-photographing apparatus of claim 7, wherein reference coordinates of the image displayed on the display panel (20) are determined according to connection states of the basic terminal (62a) to the respective mode terminals (62b, 62c and 62d).

9. The image-photographing apparatus of claim 7, wherein the respective mode terminals (62b, 62c and 62d) each occupies a predetermined space between a reference angle 0° and a rotation angle of at least 270°, wherein the reference angle 0 is set as the display panel (20) is seated in the body (10).

10. The image-photographing apparatus of claim 7, wherein the first mode terminal (62b) is provided in a space between 0° and at least 135°, the second mode terminal (62c) is provided in a space between 135° and 225°, and the third mode terminal (62d) is provided in a space between 225° and at least 270°, and the first, the second, the third mode terminals (62b, 62c and 62d) are connected to the basic terminal (62a) by the switching elastic piece (63).

11. The image-photographing apparatus of claim 1, wherein the body (10) comprises:
a first case (11) in which a storage medium is disposed;
a second case (12) connected to an upper portion of the first case (11), in which the camera unit is disposed; and
a third case (13) connected to the upper portion of the first case (11) to be symmetrical to the second case (12), in which a viewfinder (15) is disposed,
wherein between the second and the third cases (12 and 13) is provided a gap (G) for movably receiving the hinge unit (30).

12. The image-photographing apparatus of claim 11, wherein the body (10) further comprises a cover bracket (17) connected to the hinge unit (30), for covering the gap (G).

13. The image-photographing apparatus of claim 11, wherein the first case (11) comprises:
a panel receiving portion (11a) depressed in an outer side of the first case (11), for receiving the display panel (20); and
a battery receiving portion depressed in the other outer side of the first case (11) and symmetrical to the panel receiving portion (11a).

14. The image-photographing apparatus of claim 7, wherein the first, the second and the third mode terminals (62b, 62c and 62d) are disposed within the same rotation radius.

## Patentansprüche

1. Bildfotografiervorrichtung, die Folgendes umfasst:
eine Kameraeinheit zum Aufnehmen eines Bildes;
ein Gehäuse (10), in dem die Kameraeinheit angeordnet ist;
eine Anzeigetafel (20) zum Anzeigen des Bildes; und
eine Gelenkeinheit (30), die mit der Anzeigetafel (20) verbunden ist, um die Anzeigetafel (20) zwischen einer Seite des Gehäuses (10) und der anderen Seite des Gehäuses (10) um eine erste Achse (A) zu drehen und die Anzeigetafel (20) um eine zweite Achse (B) lotrecht zur ersten Achse (A) zu drehen,
**dadurch gekennzeichnet, dass** die Gelenkeinheit (30) Folgendes umfasst: eine an dem Gehäuse (10) befestigte Halterung (41) mit einem Schaftloch (41a); ein in dem Schaftloch (41a) steckendes Schaftelement (43); eine an dem Schaftelement (43) gelagerte Drehhalterung (42), die relativ zur Halterung (41) in Bezug auf eine Bildfotografierrichtung drehbar ist, die von der Kameraeinheit ensprechend der ersten Achse (A) festgelegt wird; und eine zweite Achseneinheit (50), die von der Drehhalterung getragen wird und die Anzeigetafel für eine Drehung um die zweite Achse (B) trägt.

2. Bildfotografiervorrichtung nach Anspruch 1, wobei die Halterung (41), das Schaftelement und die Drehhalterung (42) in einer ersten Achseneinheit (40) vorgesehen sind, die die Anzeigetafel (20) in einem Winkel mit Bezug auf die erste Achse (A) entsprechend einer Bildfotografierrichtung trägt und dreht, und die Drehhalterung (42) die mit der ersten Achseneinheit (40) verbundene zweite Achseneinheit (50) trägt und die Anzeigetafel (20) für eine Drehung um die zweite Achse (B) lotrecht zur Bildfotografierrichtung trägt.

3. Bildfotografiervorrichtung nach Anspruch 2, wobei die erste Achseneinheit (40) ferner Folgendes umfasst:
eine Klickhalterung (44), die zwischen der Halterung (41) und der Drehhalterung (41) angeordnet ist, um einen Klick zu erzeugen, wenn sich die Drehhalterung (41) um einen vorbestimmten Winkel gedreht hat.

4. Bildfotografiervorrichtung nach Anspruch 3, wobei die Klickhalterung (44) eine Tellerfeder ist, die an der Drehhalterung (42) befestigt ist und von der erhabene Abschnitte in einem vorbestimmten Drehwinkelintervall vorstehen, die in eine in der Halterung (41) ausgebildete Klickaussparung eingeführt werden.

5. Bildfotografiervorrichtung nach Anspruch 2, wobei die erste Achseneinheit (40) ferner einen Erkennungsschalter (60) zum Erkennen eines Drehzustands der Anzeigetafel (20) umfasst.

6. Bildfotografiervorrichtung nach Anspruch 5, wobei der Erkennungsschalter (60) Folgendes umfasst:
ein Musterabschlussfeld (61), das auf der Halterung (41) liegt und einen Schalteranschluss (62) mit einem vorbestimmten Muster aufweist, das auf einer der Drehhalterung gegenüberliegenden Fläche angeordnet ist; und
ein elastisches Schaltstück (63), das von der Drehhalterung (42) getragen wird und sich zusammen mit dieser dreht und den Schalteranschluss (62) gemäß einer Drehposition zum Ein- und Ausschalten je nach einem Positionsmodus der Anzeigetafel elastisch kontaktiert.

7. Bildfotografiervorrichtung nach Anspruch 6, wobei der Schalteranschluss (62) Folgendes umfasst:
einen Basisanschluss (62a), der in einem Kreisbogenmuster um eine Drehachse der Drehhalterung (42) gestaltet ist; und
einen ersten, zweiten und dritten Modusanschluss (62b, 62c und 62d) neben dem Basisanschluss (62a) und durch das elastische Schaltstück (63) gemäß dem Drehwinkel der Drehhalterung (42) selektiv mit dem Referenzanschluss verbunden.

8. Bildfotografiervorrichtung nach Anspruch 7, wobei Referenzkoordinaten des auf der Anzeigetafel (20) angezeigten Bildes gemäß Verbindungszuständen des Basisanschlusses (62a) mit den jeweiligen Modusanschlüssen (62b, 62c und 62d) bestimmt werden.

9. Bildfotografiervorrichtung nach Anspruch 7, wobei die jeweiligen Modusanschlüsse (62b, 62c und 62d) jeweils einen vorbestimmten Raum zwischen einem Referenzwinkel von 0° und einem Drehwinkel von wenigstens 270° einnehmen, wobei der Referenzwinkel 0 eingestellt wird, wenn die Anzeigetafel (20) im Gehäuse (10) sitzt.

10. Bildfotografiervorrichtung nach Anspruch 7, wobei der erste Modusanschluss (62b) in einem Raum zwischen 0° und wenigstens 135° vorgesehen ist, der zweite Modusanschluss (62c) in einem Raum zwischen 135° und 225° vorgesehen ist und der dritte Modusanschluss (62d) in einem Raum zwischen 225° und wenigstens 270° vorgesehen ist und der erste, zweite und dritte Modusanschluss (62b, 62c und 62d) durch das elastische Schaltstück (63) mit dem Basisanschluss (62a) verbunden sind.

11. Bildfotografiervorrichtung nach Anspruch 1, wobei das Gehäuse (10) Folgendes umfasst:
einen ersten Gehäuseteil (11), in dem ein Speichermedium angeordnet ist;
einen mit einem oberen Abschnitt des ersten Gehäuseteils (11) verbundenen zweiten Gehäuseteil (12), in dem die Kameraeinheit angeordnet ist; und
einen dritten Gehäuseteil (13), der mit dem oberen Teil des ersten Gehäuseteils (11) symmetrisch zum zweiten Gehäuseteil (12) verbunden ist, in dem ein Sucher (15) angeordnet ist,
wobei zwischen dem zweiten und dem dritten Gehäuseteil (12 und 13) eine Lücke (G) zum beweglichen Aufnehmen der Gelenkeinheit (30) vorgesehen ist.

12. Bildfotografiervorrichtung nach Anspruch 11, wobei das Gehäuse (10) ferner eine Abdeckhalterung (17) umfasst, die zum Abdecken der Lücke (G) mit der Gelenkeinheit (30) verbunden ist.

13. Bildfotografiervorrichtung nach Anspruch 11, wobei der erste Gehäuseteil (11) Folgendes umfasst:
einen Tafelaufnahmeabschnitt (11a), der zum Aufnehmen der Anzeigetafel (20) in einer Außenseite des ersten Gehäuseteils (11) eingelassen ist; und
einen Batterieaufnahmeabschnitt, der in der anderen Außenseite des ersten Gehäuseteils (11) symmetrisch zum Tafelaufnahmeabschnitt (11a) eingelassen ist.

14. Bildfotografiervorrichtung nach Anspruch 7, wobei der erste, zweite und dritte Modusanschluss (62b, 62c und 62d) im selben Drehradius angeordnet sind.

## Revendications

1. Appareil de photographie d'images comprenant :
une unité de caméra pour capturer une image ;
un corps (10) dans lequel est disposée l'unité de caméra ;
un panneau d'affichage (20) pour afficher l'image ; et
une unité d'articulation (30) connectée au panneau d'affichage (20), pour faire tourner le panneau d'affichage (20) entre un côté du corps (10) et l'autre côté du corps (10) autour d'un premier axe (A) et faire tourner le panneau d'affichage (20) autour d'un second axe (B) perpendiculaire au premier axe (A),
**caractérisé en ce que** l'unité d'articulation (30) comprend un collier de fixation (41) fixé au corps (10) et présentant un trou d'arbre (41a) ; un élément d'arbre (43) inséré dans le trou d'arbre (41a) ; un collier rotatif (42) supporté sur l'élément d'arbre (43) pour pouvoir tourner relativement au collier de fixation (41) relativement à un sens de photographie d'image qui est établi par l'unité de caméra correspondant au premier axe (A) ; et une seconde unité d'axe (50) supportée par le collier rotatif supportant le panneau d'affichage pour tourner autour du second axe (B).

2. Appareil de photographie d'images selon la revendication 1, dans lequel le collier de fixation (41), l'élément d'arbre et le collier rotatif (42) sont fournis dans une première unité d'axe (40) qui supporte et fait tourner le panneau d'affichage (20) à un certain angle relativement au premier axe (A) correspondant à un sens de photographie d'image, et le collier rotatif (42) supporte la seconde unité d'axe (50) connectée à la première unité d'axe (40), supportant le panneau d'affichage (20) en vue de sa rotation autour du second axe (B) perpendiculaire au sens de photographie d'image.

3. Appareil de photographie d'images selon la revendication 2, dans lequel la première unité d'axe (40) comprend en outre :
un collier à déclic (44) disposé entre le collier de fixation (41) et le collier rotatif (41), pour générer un déclic quand le collier rotatif (41) tourne à un angle prédéterminé.

4. Appareil de photographie d'images selon la revendication 3, dans lequel le collier à déclic (44) est un ressort à plaque qui est fixé au collier rotatif (42) et qui comporte des parties bosselées en saillant à un intervalle d'angle de rotation prédéterminé destinées à s'insérer dans un évidement de déclic formé dans le collier de fixation (41).

5. Appareil de photographie d'images selon la revendication 2, dans lequel la première unité d'axe (40) comprend en outre un commutateur de détection (60) pour détecter un état de rotation du panneau d'affichage (20).

6. Appareil de photographie d'images selon la revendication 5, dans lequel le commutateur de détection (60) comprend :
un panneau de bornes de configuration (61) supporté par le collier de fixation (41), et présentant une borne de commutation (62) d'une configuration prédéterminée disposée sur une surface opposée au collier rotatif ; et
une pièce élastique de commutation (63) supportée par le collier rotatif (42) et tournant avec celui-ci, et faisant contact de façon élastique avec la borne de commutation (62) en fonction d'une position de rotation à activer ou désactiver en fonction d'un mode de position du panneau d'affichage.

7. Appareil de photographie d'images selon la revendication 6, dans lequel la borne de commutation (62) comprend :
une borne de base (62a) formée en une configuration arquée circulaire autour d'un axe de rotation du support rotatif (42) ; et
des première, seconde et troisième bornes de mode (62b, 62c et 62d) adjacentes à la borne de base (62a) et connectées sélectivement à la borne de référence par la pièce élastique de commutation (63) en fonction de l'angle de rotation du collier rotatif (42).

8. Appareil de photographie d'images selon la revendication 7, dans lequel les coordonnées de référence de l'image affichée sur le panneau d'affichage (20) sont déterminées en fonction des états de connexion de la borne de base (62a) aux bornes de mode respectives (62b, 62c et 62d).

9. Appareil de photographie d'images selon la revendication 7, dans lequel les bornes de mode respectives (62b, 62c et 62d) occupent chacune un espace prédéterminé entre un angle de référence 0° et un angle de rotation d'au moins 270°, dans lequel l'angle de référence 0 est réglé quand le panneau d'affichage (20) repose dans le corps (10).

10. Appareil de photographie d'images selon la revendication 7, dans lequel la première borne de mode (62b) est fournie dans un espace entre 0° et au moins 135°, la deuxième borne de mode (62c) est fournie dans un espace entre 135° et 225°, et la troisième borne de mode (62d) est fournie dans un espace entre 225° et au moins 270°, et les première, deuxième et troisième bornes de mode (62b, 62c et 62d) sont connectées à la borne de base (62a) par la pièce élastique de commutation (63).

11. Appareil de photographie d'images selon la revendication 1, dans lequel le corps (10) comprend :
un premier boîtier (11) dans lequel est disposé un moyen de mémorisation ;
un deuxième boîtier (12) connecté à une partie supérieure du premier boîtier (11), dans lequel est disposée l'unité de caméra ; et
un troisième boîtier (13) connecté à la partie supérieure du premier boîtier (11) de façon symétrique au deuxième boîtier (12), dans lequel une mire (15) est disposée,
dans lequel entre les deuxième et troisième boîtiers (12 et 13) un espace (G) est aménagé pour recevoir de façon mobile l'unité d'articulation (30).

12. Appareil de photographie d'images selon la revendication 11, dans lequel le corps (10) comprend en outre un collier pour couvercle (17) raccordé à l'unité d'articulation (30), pour couvrir l'espace (G).

13. Appareil de photographie d'images selon la revendication 11, dans lequel le premier boîtier (11) comprend :
une partie réceptrice de panneau (11a) enfoncée dans un côté extérieur du premier boîtier (11), destinée à recevoir le panneau d'affichage (20) ; et
une partie réceptrice de batterie enfoncée dans l'autre côté extérieur du premier boîtier (11) et symétrique à la partie réceptrice de panneau (11a).

14. Appareil de photographie d'images selon la revendication 7, dans lequel les première, deuxième et troisième bornes de mode (62b, 62c et 62d) sont disposées dans le même rayon de rotation.
